# EUROPEAN PATENT SPECIFICATION

(11) **EP 1 777 936 B1**
(45) Date of publication and mention of the grant of the patent: **20.04.2011**
(21) Application number: 06254961.3
(22) Date of filing: 25.09.2006
(51) Int. Cl.: H04N 1/44

(54) **Multi function peripheral**
Multifunktionales Peripheriegerät
Dispositif périphérique à fonctions multiples

(30) Priority: 30.09.2005 JP 2005286161
(43) Date of publication of application: 25.04.2007
(73) Proprietor: Brother Kogyo Kabushiki Kaisha, Nagoya-shi, Aichi-ken 467-8561 (JP)
(72) Inventor: Itoh, Shingo, c/o Brother Kogyo K.K., IP Dept., Nagoya-shi, Aichi-ken 467-8562 (JP)
(74) Representative: Smith, Samuel Leonard

(56) References cited:
- EP-A- 0 944 238
- EP-A2- 1 574 930
- JP-A- 10 058 796
- US-A1- 2003 152 231
- US-A1- 2005 204 144

## Description

### Cross-Reference to Related Application

This application claims priority from Japanese Patent Application No.2005-286161, filed on September 30, 2005.

### Background

### Technical Field

The present invention relates to a multi function peripheral having a plurality of functions such as a facsimile, a copier, a scanner, and a multi function peripheral control program.

### Related Art

A multi function peripheral is widely known which is provided with a plurality of functions, a facsimile transmission function to transmit image information via a communication line and a facsimile receive function to receive image information, a copier function to read image information recorded on a record medium and record the image information on another record medium, a scanner function to read image information recorded on a record medium and stored in a memory unit, etc.

Japanese Patent Application Provisional Publication No. P2002-152446A discloses a multi function peripheral which stores menu display data for each user in the memory unit beforehand, displays the menu corresponding to a user when the user inputs his/her identification information (password), and allows the user to use functions indicated by the menu.

US 2005/0204144 concerns an image-processing apparatus and a personal information management program. It mentions the possibility of a multi-function peripheral as the image-processing apparatus. The image-processing apparatus includes an image-processing section having an image-forming section and an image-reading section. The image-processing apparatus also includes a personal information processing section. ID information is provided by individual users such that specific individual users are permitted to operate individually and each user can perform the processing of his or her own personal information while preventing leakage of the user's personal information and without disturbing the use of an indefinite number of users to any substantial extent. In particular, the personal information processing section has a role to process, based on ID information of an authenticated user, personal information (for example information managed in a mail server, a schedule management server, a time record management server, a bulletin board server and a document server) concerning the user corresponding to the ID information.

EP 0 944 238 A concerns a digital image processing apparatus, such as a printer. A list of authorized users is maintained and a user enters a user code in order to obtain authorization to use the functions of the apparatus.

US 2006/0026434 A1, upon which the precharacterising portion of appended claims 1 and 12 are based, describes an image forming apparatus (for example, MFP (Multi Function Peripheral)) comprising an authentication part which performs user authentication by communicating with an authentication server, a storing part which stores "use-permission-information" for setting permission and/or prohibition of use of the apparatus for each user, and a determining part which determines permission and/or prohibition of the user of the apparatus by a user authorized by the authentication part on the basis of the use-permission-information.

When the multi function peripheral is installed in a place where many people gather such as a company, expenses due to private use which has no relationship to original business tend to be a problem. Then, occasionally, only specific persons authenticated by inputting a password can use the device. In some cases, a setup of a password and functions to be allowed to use has to be done for each of all users, and there is a heavy load for administration of the device. Further, a user must input his/her password to be authenticated every time in any case, and an operation is complicated.

### Summary of the Invention

Aspects of the invention are advantageous in that there is provided a multi function peripheral which can determine and set up whether each function is allowed to be used even when the authentication is not executed.

According to aspects of the invention, there is provided a multi function peripheral as defined in appended claim 1.

Therefore, it can be set up whether usage of each function is allowed based on the individual registration information indicating whether usage of each function is allowed corresponding to individual user, and it can be set up whether usage of each function is allowed based on the public information whether usage of each function is allowed corresponding to a public user whose identity is not authenticated. Accordingly, by setting up properly for an individual user and a public user depending on a place where the multi function peripheral is installed, better operatability is attained. For example, in case that user authentication is not executed, by setting up to allow minimum functions to be used, a user can use the minimum functions without inputting his/her password. Therefore, it is not necessary to set up a function to require every user to input his/her password and allow usable function to each user, leading to load reduction in administration of the device.

Optionally, the multi function peripheral may include a determination unit to determine whether prescribed administrator identification information is input to the input unit, and a registration information setup unit that makes it possible to set up the individual registration information or the public registration information indicating whether each of the plurality of functions is allowed to be used to each of the individual information memory unit and the public information memory unit in case that the prescribed administrator identification information is determined to be input.

Therefore, only a person who knows specific identification information can set up individual registration information and public registration information, and private use can be prevented as much as possible. A setup for each individual user and a setup in case that user authentication is not executed can be done depending upon a place where the multi function peripheral is installed.

Further optionally, the multi function peripheral may be configured that the public registration information stored in the public information memory unit indicates prescribed functions of the plurality of functions cannot be allowed to be used by the information setup unit.

Therefore, when an administrator allows a public user to use each function, it can be prevent the administrator from allowing mistakenly the user to use a function which should not be allowed.

Optionally, the multi function peripheral may include a template information memory unit that stores template information set up preliminarily whether each of plurality of function is allowed to be used comprising, and the registration information setup unit may be provided with a template information memory unit that sets up the individual registration information or public registration information indicating whether each function is allowed to be used to the individual information memory unit and the public information memory unit based on the template information stored in the template information memory unit.

Therefore, it is not necessary to set up each of a plurality of functions one by one, and registration information is easily set up by simple operation.

Optionally, the registration information setup unit is provided with a public information utilization unit that sets up the individual registration information in the individual information memory unit using the public registration information stored in the public information memory unit.

Therefore, a setup corresponding to a user can be made based on the registration information stored in the public information memory unit, and a setup operation for the user can be made easy.

Further optionally, the public information utilization unit may set up to similarly allow usage of functions of which usage is set up to be allowed among the plurality of functions in the public registration information stored in the public information memory unit when the individual registration information is set up in the individual information memory unit.

The registration information stored in the public information memory unit is to allow usage of minimum functions and functions to be allowed to use corresponding to a user usually contain functions allowed to a public user and more. Therefore, a setup operation for the user can be made easy.

Optionally, the multi function peripheral may be provided with a display unit, and the public information utilization unit may display setup contents of the public registration information stored in the public information memory unit on the display unit when the individual registration information is set up in the individual information memory unit.

Therefore, when registration information is set up corresponding to a user, referring to the registration information set up for a public user, the registration information for individual user can be set up associating with the registration information set up for a public user.

Further optionally, the individual information memory unit displays the information on the display unit so as to make it possible to determine whether the public registration information is set up in the public information memory unit on the display unit when the individual registration information is set up.

Therefore, when individual registration information is set up corresponding to an individual user, it can be confirmed whether public registration information is set up. In case that it is necessary to set up public registration information, if it is found that the public registration information is not set up, the public registration information can be set up. In addition, in case that public registration information is set up, individual registration information can be set up by utilizing the public registration information.

Optionally, the public information memory unit may store an initial registration information that is set up where usage of each function is not allowed in an initial condition where the registration information setup unit has not set up.

Therefore, in case that the registration information for the public user is not set up by an administrator, etc., usage of all function is not allowed to the public user. So, private use can be prevented as much as possible to cut expenses.

Optionally, the multi function peripheral may include an operation unit that have an operator to select one of the plurality of functions, an operator to set up parameters of each of the plurality of functions and a time unit that times when either operator of the operation unit is not operating. When the identification information is input to the input unit, and it is set up whether usage of each function is allowed based on the individual registration information stored in the individual information memory unit in association with the identification information, in case that the time unit times the prescribed time, the function setup unit sets up whether usage each function is allowed based on the public registration information stored in the public information memory unit.

Therefore, even if a user is authenticated and allowed to use functions corresponding to the user, in case that the operator is not operated in a prescribed time, the setup is back to a setup corresponding to a public user, and it can be prevented from setting free to use functions that are not allowed for a public user.

According to aspects of the invention, there is provided a method and a corresponding multi function peripheral control program as defined in appended claims 12 and 14.

Therefore, it can be set up whether usage of each function is allowed based on the individual registration information indicating whether usage of each function is allowed corresponding to individual user, and it can be set up whether usage of each function is allowed based on the public information whether usage of each function is allowed corresponding to a public user whose identity is not authenticated. Accordingly, by setting up properly for the individual user and the public user depending on a place where the multi function peripheral is installed, better operatability is attained. For example, in case that user authentication is not executed, by setting up to allow minimum functions to be used, a user can use the minimum functions without inputting his/her password.

Optionally, the multi function peripheral may include a template information memory unit that stores template information set up preliminarily whether usage of each function of the plurality of functions is allowed, a template information utilization step to set up the individual registered information or the public registration information indicating whether usage of each function of the plurality of functions is allowed based on the template information stored in the template information memory unit, the individual information memory unit and the public information memory unit, a public information utilization step that sets up the individual registration information in the individual information memory unit based on the registration information stored in the public information memory unit.

Therefore, the registration information stored in the template information memory unit can be used in case that it is set up whether many functions are allowed to be used by a user, and registration information is easily set up by simple operation.

### Brief Description of the Accompanying Drawings

Fig. 1 is a block diagram which shows an electrical configuration of a communication system containing a multi function peripheral according to the embodiment of the present invention.
Fig. 2 is a plain view of the operation panel portion of the multi function peripheral.
Fig. 3 shows tables of individual registration information and public registration information.
Figs. 4A-4O are schematic views each of which shows a display in the setting process on the LCD of the multi function peripheral.
Fig. 5 is a flowchart which shows a main process.
Fig. 6 is a flowchart which shows a process executed in the main process in case of the lock off condition.
Fig. 7 is a flowchart which shows a setting process.
Fig. 8 shows tables of a 1-job accounting information and accumulative accounting information.
Fig. 9 is a flowchart which shows an accounting process.
Figs. 10A-10C are schematic views each of which shows a division of memory areas of the RAM.

### Detailed Description

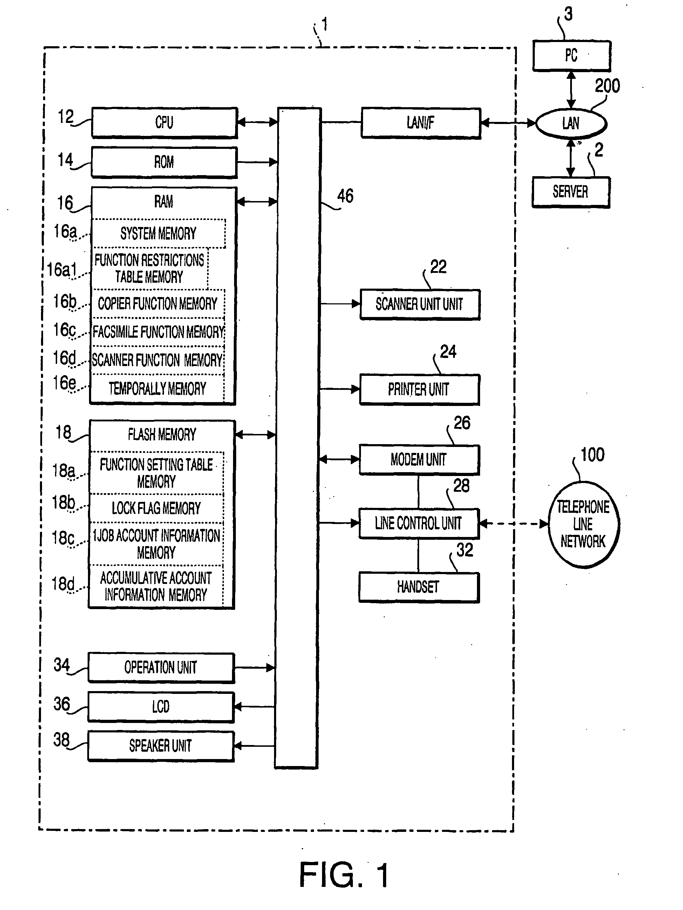

Referring now to the drawings, a description will be given in detail according to illustrative embodiments of the present invention. Fig. 1 is a block diagram which shows a configuration of a communication system that contains a multi function peripheral (hereinafter referred to an MFP) of an embodiment according to aspects of the present invention. As can be seen in Fig. 1, the communication system is configured with the MFP 1 which has a plurality of functions such as a facsimile function, a server 2 and a personal computer 3 (hereinafter referred to a PC 3) which are communicatably connected to the MFP 1. As shown in Fig. 1, the MFP 1 of the communication system is also connected to a telephone line network 100.

The MFP 1 has a facsimile function which realizes facsimile communication and a voice call function which realizes voice communication via the telephone line network 100. The MFP 1 also contains various functions such as a printer function, a copier function, a scanner function in its body. Further, the MFP 1 contains a PC fax function which forwards received fax data to the personal computer 3 via a LAN.

As shown in Fig. 1, the MFP 1 includes a CPU 12 which controls operations of the entire MFP 1, a ROM 14 which stores various control programs which are executed by the CPU 12, and fixed value data, a RAM 16 which is a memory for storing temporarily necessary data and programs in various processes executed by the CPU 12, a rewritable nonvolatile flash memory 18 which stores various setups, a scanner unit 22, a printer unit 24, a modem 26, a line control unit 28, a handset 32 which is detachable from a body part of the MFP 1 and is used for telephone transmission and receiving in the voice call function, an operation unit 34 which has a plurality of operation input keys (buttons and switches) to execute various functions of the MFP 1, an LCD 36 which is a liquid crystal display (hereinafter referred to an "LCD") to display various information of the MFP 1, a speaker unit 38 which has a speaker and a drive circuitry to drive the speaker, a LAN I/F 40 which is a LAN interface unit (hereinafter referred to a "LAN I/F") to connect with the server 2 and the PC 3 to the LAN 200 (Local Area Network 200).

The CPU 12, the ROM 14, the RAM 16, the scanner unit 22, the printer unit 24, the modem 26, the line control unit 28, the operation unit 34, the LCD 36, the speaker unit 38, and the LAN I/F 40 are connected to each other via a bus line 46. In addition, the line control unit 28 is connected to the modem 26 or the handset 32 via a transmission path.

The scanner unit 22 reads out an image from an original copy set at a prescribed reading position (not shown), and generates image data of the image based on an instruction from the CPU 12. The image data read out by the scanner unit 22 is transmitted to a communication partner device designated by a telephone number, etc., through the modem 26, the line control unit 28 and the telephone line network 100, when the MFP 1 is set in a facsimile mode (hereinafter referred to a "FAX mode") where a facsimile function is activated in the MFP 1.

In addition, when the MFP 1 is set in a copy mode (hereinafter referred to a "COPY mode") where a copier function is activated in the MFP 1, image data generated by the scanner unit 22 is printed out on a record paper by the printer unit 24. Further, when the MFP 1 is set in a scanner mode (hereinafter referred to a "SCAN mode") where a scanner function activated in the MFP 1, the image data generated by the scanner unit 22 is stored in a prescribed memory region of the RAM 16.

The printer unit 24 is configured with an ink jet printer which prints on record papers set at a prescribed paper feed position (not shown) based on instructions from the CPU 12, and has a record paper feed motor which feeds record papers (not shown), a print head which propels droplets of ink onto record papers (not shown), and a carriage motor which moves a carriage to which the print head is mounted (not shown).

When the MFP 1 is setup in the FAX mode to print facsimile data received through the telephone line network 100, the line control unit 28 and the modem 26 from the communication partner device, image data generated by the printer unit 24 is printed on a record paper based on the received facsimile data.

In addition, when the MFP 1 is set up in the COPY mode, the image data generated by the scanner unit 22 is printed on a record paper by the printer unit 24.

The modem 26 modulates the image data generated by the scanner unit 22, generates image signal transmittable to the telephone line network 100 via the line control unit 28, demodulates the image signals input from the telephone line network 100 via the line control unit 28 into image data based on instruction from the CPU 12.

The line control unit 28 handles various signal inputs from the telephone line network 100 and signal outputs to the telephone line network 100 and set up a transmission path between the line control unit 28 and the telephone line network 100 based on instructions from the CPU 12. When the operation to transmit the image (transmit facsimile data) by the operation unit 34 is executed, or when image signal is received (facsimile data is received) from the telephone line network 100, a path toward the modem 26 is set up as the transmission path. Then, the image signal can be transmitted through the path. Whereas, the set up transmission path is cancelled when the image signal output by the modem 26 is completed, or the image signal input is completed from the telephone line 100, and the image signal is not transmitted through the path.

When an operation to detach the handset 32 from a body part of the MFP 1 is executed (offhook operation), a path from the line control unit 28 to the handset 32 is set up as the above described transmission path, and audio signal can be transmitted through the path. The transmission path which is set up in this way is cancelled when an operation to put the handset 32 back to the body part of the MFP 1, then, audio signal cannot be transmitted through the path.

The RAM 16 includes a system memory 16a, a copier function memory 16b, a facsimile function memory 16c, a scanner function memory 16d, a temporary memory 16e. The system memory 16a is a memory area which is used when the MFP 1 executes various functions, and includes a function restrictions table 16a1 that stores which functions among the plurality of functions of the MFP 1 are allowed to be used corresponding to a user. The function restrictions table 16a1 stores information which functions are allowed to be used and which functions are not allowed to be used among the plurality of functions at the time point. When the user selected one of the functions, FAX mode, COPY mode, SCAN mode, etc. by a key operation, the function restrictions table 16a1 is referred and it is determined whether the function is allowed to be used by the user. Then, when a use environment is changed, for example, a user is changed, or a lock condition is changed from "on" to "off', contents in the function restrictions table 16a1 are rewritten accordingly.

The copier function memory 16b is a memory area which stores image data generated by the scanner unit 22 when a copy mode is selected. The facsimile memory 16c is a memory area which stores transmitted facsimile data and received facsimile data. The scanner function memory 16d is a memory area which stores image data generated by the scanner unit 22 when a scanner mode is selected. The temporary memory 16e is a memory area to be used when the memory area assigned to each mode is short of necessary area or temporarily memory needs to be used. A size of the each area is set up as needed.

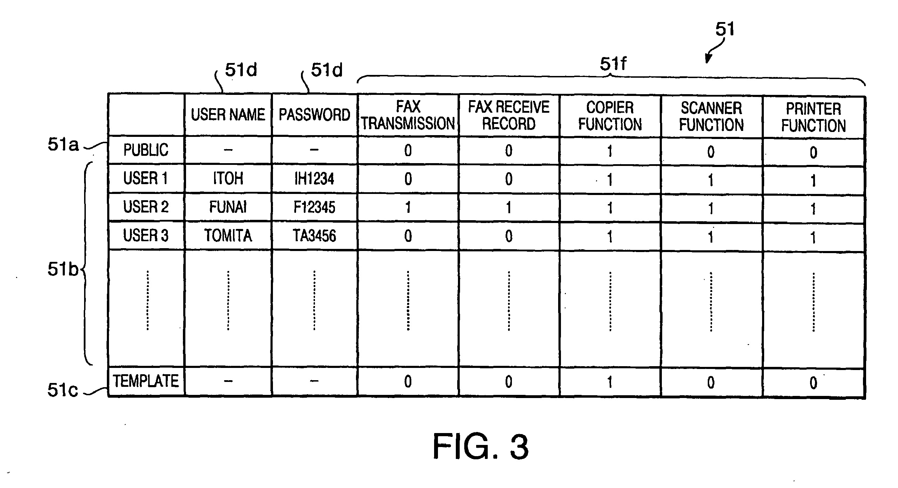

The flash memory 18 includes function setting table memory 18a that stores a function setting table 51 (see Fig. 3), a lock flag memory 18b that stores a lock flag, a 1-job account information memory 18c that stores usage condition to charge a user for usage of the MFP 1, and an accumulative accounting information memory 18d.

The function setting table 51 stores public registration information that sets up whether it is allowed or not for a public user who is not individually registered to use each function of the plurality of functions of the MFP 1, individual registration information that sets up whether it is allowed or not for individual user to use each function, and template information preliminarily sets up whether each of plurality of function is allowed to be used.

The public registration information is information indicating whether it is allowed or not to use each function of the plurality of functions of the MFP 1 for a public user who has not a password. When the MFP 1 is supplied from the maker (at the time of shipment from the factory), all functions are set up not to be allowed to use. Herewith, if registration information is not set up for a public user by the administrator, etc., any public user is not allowed to use any function of the MFP 1. Thus, private use can be prevented as much as possible to cut expenses.

As a specific person, the administrator set up a password, and when the password is input, public registration information can be rewritten. In case that public registration information is rewritten, template information is read out, and the template information can be set up as public registration information as it is. Then, changes can be added to some of the functions.

The individual registration information is information indicating whether it is allowed or not to use each function of the plurality of functions of the MFP 1 for a user who has a password. Similarly to the public registration information, as a specific person, the administrator sets up a password, and when the password is input and his/her identification is authenticated, individual registration information of each user can be rewritten.

In case that individual registration information is rewritten, public registration information is read out, and the public registration information can be registered as individual registration information as it is. Or, similarly to the case of the public individual registration information, template information is read out, and the template information can be registered as the individual registration information. Then, changes can be added to some of the functions. The function setting table 51including the public registration information and the individual registration information is described later with reference to Fig. 3.

The lock flag memory 18b stores a lock flag which shows that the MFP 1 is in which state, a lock off condition where usage of all functions is not limited or a lock on condition where allowable functions are restricted depending upon each user. The lock flag is set to be "0" in case of the lock off condition where user identification is not executed and usage of all functions are not limited, and the lock flag is set to be "1" in case of the lock on condition where usage of functions are restricted for each user. The lock flag can be changed only when a password of the administrator (a person who is in charge of managing the MFP 1, usually in an organization, a person who is recognized to have an administrative ability is named.) is input. The lock flag is set up to be "0" at time of shipment from the factory.

The 1-job account information memory 18c stores usage condition of each 1-job for each user in order to calculate for each 1-job. Here, a 1-job means processes executed between the time a user starts usage and terminates usage. For example, when User 1 transmits a facsimile and a copy is executed, then User 2 starts usage, 1-job accounting information of User 1 is facsimile transmission and copy. In this way, for each 1-job, 1-job accounting information is stored in the memory, and when utility rate is collected for each 1-job, utility rate can be calculated by referring to the 1-job account information memory 18c.

The accumulative accounting information memory 18d stores accumulative usage condition instead of usage condition for each 1-job, and stores executed functions sequentially added for each user. For example, in case that utility rate is collected each month, usage amount is calculated, and the accumulative accounting information is deleted on the final day of each month. Next month, every usage is added to usage situation stored in the memory, and utility rate can be calculated from accumulative usage amount on the final day of the month, for each user.

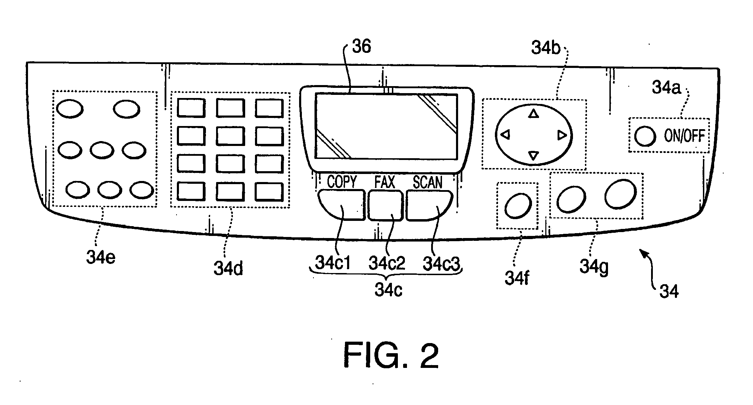

Next, with reference to Fig. 2, an operation panel portion of the MFP 1 is explained. Fig. 2 is a plain view of the operation panel portion of the MFP 1. As shown in Fig. 2, the operation panel portion is configured with various operation input keys 34a-34g which constitute the operation unit 34, and an LCD 36.

When the power source key 34a is depressed while the MFP 1 is in the power source shut off state, the power source is turned on in the MFP 1. When the power source key 34a is depressed while the MFP 1 is in the power source turn on state, the power source is shut off in the MFP 1.

The operation input keys 34b are a cross cursor key and set keys to select options displayed on the LCD 36 which shows functions to be executed in the MFP 1 or setting values. By depressing peripheral points in up, down, left and right of the operation input key 34b, a cursor displayed on the LCD 36 can be moved in the upward, downward, left, and right directions and the functions can be selected and displayed. Then, when the cursor is positioned at the point indicating an option corresponding to the desired function or setting value, by depressing a central part of the operation input key 34b (hereinafter, referred to "setting operation"), the function or the setting value to which the cursor position is corresponding is selected or set up.

The operation input key 34c is a mode selection key (hereinafter, referred to "mode selection key 34c"), is provided with a COPY mode key 34c1 which makes a copier function of the MFP 1 work, a FAX mode key 34c2 which makes a facsimile function of the MFP 1 work, and a SCAN mode key 34c3 which makes a scanner function of the MFP 1 work.

In case that the MFP 1 is set up in the lock off condition, when any one of the mode selection keys 34c (34c1-34c3) is depressed, the MFP 1 executes the corresponding function to the depressed mode selection key 34c (34c1-34c3). Whereas, in case that the MFP1 is set up in the lock on condition, when any one of the mode selection keys 34c (34c1-34c3) is depressed, the function restrictions table 16a1 is referred, and when the function restrictions table 16alindicates usage of the function is allowed, the function is executed. When the function restrictions table 16a1 indicates usage of the function is not allowed, the speaker unit 38 is made to sound to notify the user that usage of the function is not allowed, and the LCD 36 displays a message thereof.

The operation input keys 34d constitute a numeric keypad, in case that the MFP 1 is in facsimile mode, the operation input keys are used to input a telephone number of a communication partner device to which facsimile data is transmitted and to input setting values and a password by the administrator or the registered user due.

The operation input keys 34e are menu buttons, and to instruct menu display, or execution of a specific function (for example, an on-hook dial function in a FAX mode) in various modes The operation input key 34f is a stop button, and is used to instruct to stop execution of a function during execution of various functions. The operation input key 34g is a start button, and is used to instruct to start execution of functions in FAX mode, COPY mode, etc.

The LCD 36 is a liquid crystal display which shows various information of the MFP 1. For example, the LCD 36 displays waiting information of current setup situation, etc., in operation waiting time of the MFP 1, besides the above described function at function setup time or setup display for setting values.

Next, with reference to Fig. 3, the public registration information, the individual registration information and the template information stored in the function setting table memory 18a are explained. Fig. 3 shows the function setting table 51 which indicates registration information and template information registered corresponding to a public user and registered users.

A first line of the function setting table 51 indicates setup items corresponding to users. A second line 51 a corresponds to a public user and a third second line 51b corresponds to a registered user. A last line 51c corresponds to a template. A first column of the function setting table 51 indicates a user or a template. A second column 51d indicates user names. A third column 51e indicates passwords. Fourth-eighth columns 51f indicate each function.

The each function means a facsimile transmission function shown in the fourth column, a facsimile receiving record function shown in the fifth column, a copier function shown in the sixth, a scanner function shown in the seventh column, or a printer function shown in the eighth column. The facsimile transmission function is the item to indicate whether the facsimile transmission function of the MFP 1 is allowed to be used. All received facsimile data is stored in the RAM of the MFP 1 instead of printing on a record medium. The facsimile receiving record function is a function which enables users who are allowed usage to display received contents on the LCD 36 to confirm, in case that the user determines it can be output, and to print it on the record medium or transmit it to the PC of a receiver via the LAN 200.

COPIER FUNCTION and SCANNER FUNCTION are the items to indicate whether the copier function or the scanner function of MFP 1 is allowed to be used. The printer function is a function to receive image information from PCs via the LAN 200 and to print it. PRINTER FUNCTION is the item to indicate whether the printer function is allowed to be used by recognizing the user identified from the address of the transmitted PC at the time receiving image information. There is no user name or a password as to a public user and template information.

In the function setting table 51, as to each user and template information, in case that usage of each function is allowed (Enable), "1" is stored, and in case that usage is not allowed (Disable), "0" is stored. For example, in the function setting table 51 shown in Fig. 3, only usage of a copier function is allowed for a public user, all other functions are set up not to be allowed to be used, and usage of all functions are set up to be allowed for user 2.

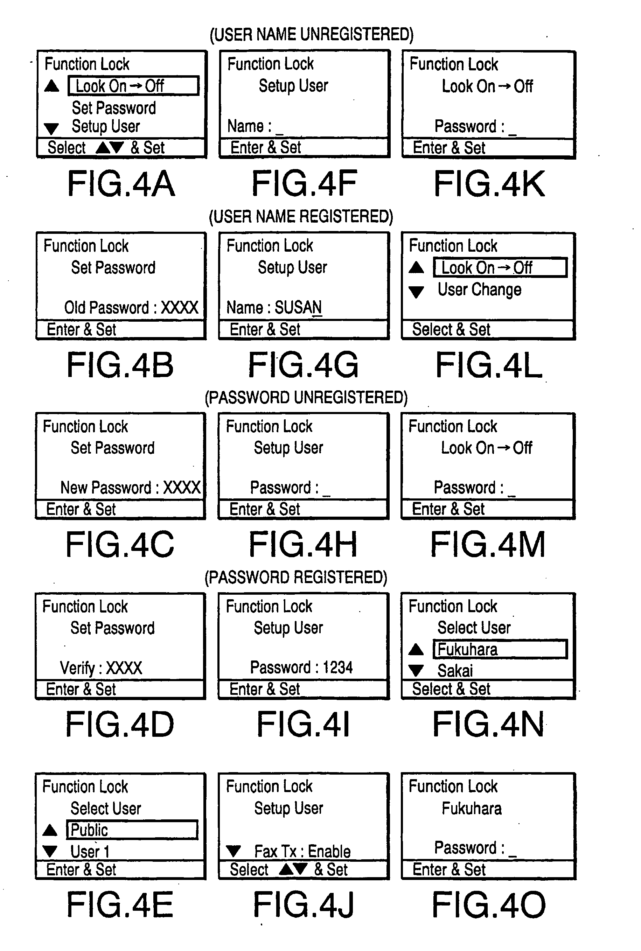

Next, with reference to Figs. 4A-O, a display screen of the LCD 36 displayed corresponding to the user's operation in the MFP 1 is explained.

Firstly, in standby state waiting for a user's operation, one of the operation input keys 34e, a menu button, is operated while the lock off condition is set up, a menu screen to select setup items shown in Fig. 4A is displayed. A case that the lock on condition is set up is described later.

In the menu screen, as the first setup item, "Lock On->Off" is displayed to change lock status from the lock on condition to the lock off condition, as the second setup item, "Set Password" is displayed to set up the administrator's password, the third setup item, "Setup User" is displayed to set up a password of the user and usage allowance or restriction of functions. By depressing peripheral points in top and bottom of the operation input key 34b, a cursor displayed on the LCD 36 is moved in the upward, downward direction, when the cursor is positioned at the point indicating an option corresponding to the desired function, the selected function is executed by setting operation. In each figure shown in Figs. 4A-O, items surrounded by bold lines indicate the location where the cursor is positioned.

When "Set Password" is selected, a password setup screens shown in Fig. 4B and Fig. 4C are displayed to set up the administrator's password, then a password is input and setting operation is executed. Further, a password setup screen Fig. 4D is displayed again for confirmation. When the password is input similarly and setting operation is executed, it is determined whether the password input previous time is identical with the password input this time. If they are identical with each other, the administrator's password is set up. If they are not identical, the password setup screen Fig. 4C is displayed once again, and the password is input.

When "Setup User" is selected, a password input screen is displayed to input the administrator's password. If the input password is identical with the stored one, a user selection screen shown in Fig. 4E to select a public user (Public) or a registered user (User 1) is displayed. If the input password is not identical with the registered one, the process returns to the selection screen shown in Fig. 4A. In Fig. 4E, "Public" and "User 1" meaning the user number 1 are shown. When the cursor is moved in upward or downward direction, "User 2", "User 3"... "User 10" meaning user numbers 2, 3, ..., 10 are displayed and either one can be selected. In the embodiment, user numbers are 1, ..., 10 as an example, there is no limitation to that. The number may be larger or fewer.

When the cursor is position to any one of the user numbers and setting operation is executed, if a user name is not registered corresponding to the user number, a user name registration screen shown in Fig. 4F is displayed. In the user name registration screen, as shown in Fig. 4G, a user name (SUSAN) is input and setting operation is executed, then the user name is registered as a registered user.

If a user name is registered associated with the user number, the user name is displayed, the user name is deleted by operating the delete button (not shown) and setting operation is executed, registration of the user is deleted. When the user registration is deleted, the process returns to the selection screen shown in Fig. 4A.

When the user name is newly registered, a password setup screen shown in Fig. 4H is displayed to set up a password corresponding to the registered user name. In the password setup screen, when a password is input and setting operation is executed, the password corresponding to the user name is registered. If a password is already registered, the password is displayed as shown in Fig. 4I. By inputting a password again and executing setting process, a password can be changed. When a password setup is finished, a function setup screen shown in Fig. 4J is displayed. When a public user is selected in the user selection screen shown in Fig. 4E, the function setup screen shown in Fig. 4J is displayed directly.

In the function setup screen, whether usage of each function of facsimile transmission, facsimile receive, copy, scan, print corresponding to a user (including a public user) is allowed is set up. In the example shown in Fig. 4J, a status is displayed where an operation is executed so that usage of a facsimile transmission (Fax Tx) function is allowed (Enable). When an upper end or a bottom end of the cross cursor key is depressed, "Enable" which indicates usage is allowed and "Disable" which indicates usage is not allowed are switched to each other, and by setting operation, registration is executed. Registration is executed as to a facsimile transmission, then, other functions are registered sequentially, such as facsimile receiving, copy.

In a screen to select setup items shown in Fig. 4A, when the first setup item "Lock On->Off" is selected, an administrator's password input screen is displayed as shown in Fig. 4K. A password is registered by inputting a password and executing setting operation. If the administrator's password is input correctly, "Accepted" is displayed for 2 seconds, the MFP 1 is set up in the lock on condition and returns to a standby state. On the other hand, if the password is not input correctly, "Wrong Password" is displayed for 2 second to show that the input password is incorrect, and returns to the standby state.

When a menu button, one of the operation keys 34e, is operated, and the MFP 1 is set up in the lock on condition, a menu screen shown in Fig. 4L to select set up items is displayed. As the first setup item, "Lock On->Off" is displayed to change the lock status from the lock on condition to the lock off condition. As the second setup item, "User Change" is displayed to change a user setup.

By depressing peripheral points in top and bottom of the operation input key 34b, a cursor is moved in the upward, downward direction, when the cursor is positioned at the point indicating an option corresponding to the desired function, the selected function is executed by setting operation.

When "Lock On->Off" is selected, a password setup screen shown in Fig. 4M is displayed to set up the administrator's password, then a password is input and setting operation is executed. A password is registered by inputting a password and executing setting operation. If the administrator's password is input correctly, "Accepted" is displayed for 2 seconds, the lock flag is set to be "0", the MFP 1 is set up in the lock off condition by storing that usage of all functions is allowed in the function restrictions table 16a1, and returns to the standby state. On the other hand, if the password is not input correctly, "Wrong Password" is displayed for 2 second to show that the input password is incorrect, and returns to the standby state.

When the second setup item "User Change" is selected, a user selection screen shown in Fig. 4N is displayed and registered user names are shown. By moving the cursor in upward and downward directions, sequentially user names are shown. By setting operation, a user name where the cursor is positioned is selected. As can be seen in Fig. 4O, the selected user name (in this example, Fukuhara) is displayed, and a screen to input the user's password is displayed. By a user's inputting a password and executing setting operation, the password is registered. If the password is a correct password corresponding to the user name, the functions corresponding to the user name are set up based on the registered contents in the function setting table 51 and the MFP 1 returns to the standby state. On the other hand, when the password is not correctly input, "Wrong Password" is displayed to show the fact that the password is not correct for 2 seconds, and the MFP 1 returns to the standby state. Furthermore, it is possible to select the public user as one of the users with the user selection screen. When the public user is selected, without inputting a password, the functions corresponding to the public user are set up based on the registered contents in the function setting table 51 and the MDF 1 returns to the standby state.

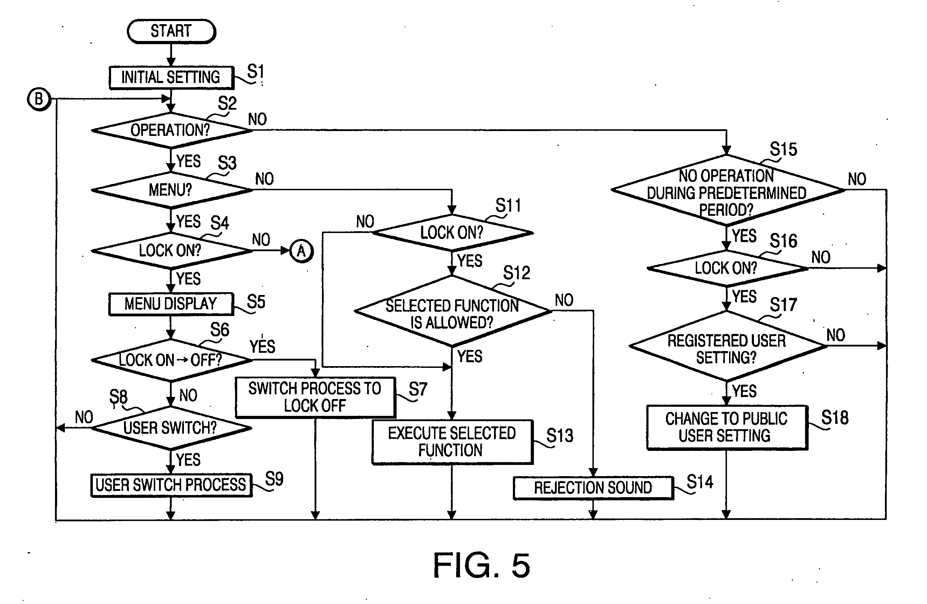

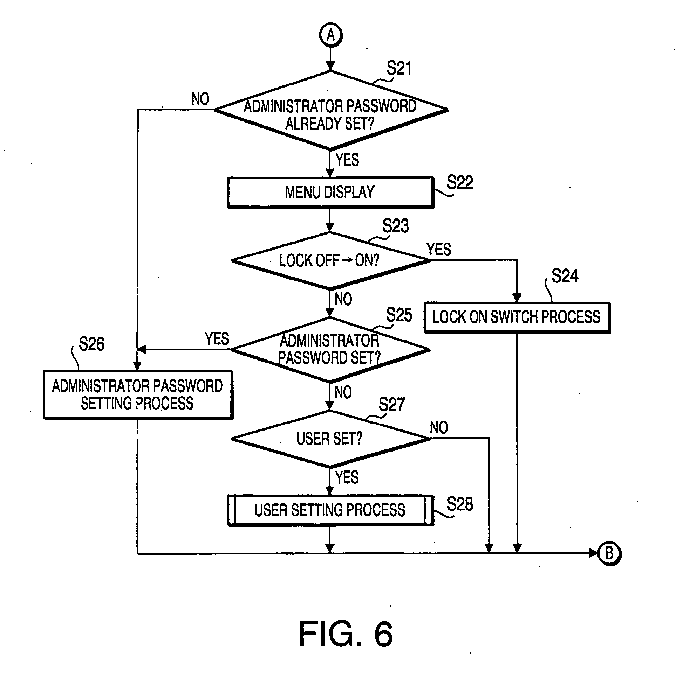

Next, referring to Fig. 5-7, processes executed by the CPU 12 of the MFP 1 are explained. Fig. 5 and Fig. 6 are flowcharts which show a main process. When a power source of the MFP 1 is turned on, the main process is booted up. Firstly, initial setting is executed (S1). In the initial setup, referring to the lock flag which is stored in the flash memory 18, if the MFP 1 is in the lock on condition, processes, such as reading a function setup of the public user stored in the function setting table memory 18a into the function restrictions table 16a1, are executed. If the MFP 1 is in the lock off condition, processes such that usage of all functions is set up to be allowed are executed. Then, the MFP 1 returns to the standby state waiting for a user's operation.

It is determined whether an operation is done in the standby state (S2). If the operation is done (S2: Yes), it is determined whether the operation is to indicate a option displayed on the menu screen (S3).

If the operation is indicate the option displayed on the menu screen (S3: Yes), it is determined whether the lock state is the lock on condition by referring to the lock flag stored in the lock flag memory 18b of the flash memory 6. Namely, if the lock flag is 0, the lock state is the lock off condition, and if the lock flag is 1, the lock state is the lock on condition.

If the lock state is the lock on condition (S4: Yes), a menu screen shown in Fig. 4L is displayed to select a process to switch from the lock on condition to the lock off condition or a process to change the registered user (S5). Next, it is determined whether the process to switch from the lock on condition to the lock off condition is selected (S6). If the process to switch from the lock on condition to the lock off condition is selected (S6: Yes), a screen shown in Fig. 4M to input the administrator's password is displayed. If the administrator's password is input correctly, the switch process from the lock on condition to the lock off condition is executed. Specifically, the lock flag stored in the lock flag memory 18b is changed from 1 to 0, the function restrictions table 16a1 stored in the system memory 16a of the RAM 16 is set up so that usage of all functions of the MFP 1 is allowed (S7). If the correct password is not input, as described above, "Wrong Password" is displayed for 2 second to show that the input password is incorrect, and returns to the standby state. It is noted that in a flowchart shown in Fig. 5, a process executed in case that the incorrect password is input is omitted to avoid complication of the flowchart.

In the determination process S6, if it is determined that the process to switch from the lock on condition to the lock off condition is not selected (S6: No), then it is determined whether a process to change a user (S8). If the process to change the user (S8: Yes), the process to change the user is executed (S9). In the process to change the user, firstly, a screen as in Fig. 4N which shows user names is displayed, and the user selects one of the users. When the user is selected, the password input screen shown in Fig. 4O is displayed. When a password is input, it is confirmed whether the password is identical with one of passwords registered in the function setting table 51. If the password is input correctly, the function restrictions table 16a1 stored in the system memory 16a of the RAM 16 is set up to indicate whether usage of each function is allowed corresponding to the user based on the individual registration information stored in the function setting table memory 18a. In addition, the public user can be selected as one of the users. If the public user is selected, without requesting to input a password, the function restrictions table 16a1 stored in the system memory 16a of the RAM 16 is set up to indicate whether usage of each function is allowed based on the public registration information stored in the function setting table memory 18a.

In this way, it is determined whether usage of each function is allowed based on the individual registration information which indicates whether usage of each function is allowed corresponding to the user. It is determined whether usage of each function is allowed based on the public registration information which indicates whether usage of each function is allowed corresponding to the public user whose identification is not authenticated.

When the switch process to the lock off condition is completed in the process S7, and when the user switch process S9 is completed, the process returns to S2. If it is determined that the user switch is not selected (S8: No), the process returns to S2. If it is determined that the lock state is not the lock on condition (S4), the process goes to processes of the flowchart shown in Fig. 6.

If it is determined that the detected operation is to indicate an operation displayed on the menu screen and the detected operation is to select a function of the MFP 1 (S3: No), it is determined whether the lock state is the lock on condition (S11). If the lock state is not the lock on condition (S11: No), the selected function is executed (S13). If the lock state is the lock on condition (S11: Yes), it is determined whether usage of the selected function is allowed (S 12). The determination is executed by referring to the function restrictions table 16a1 stored in the system memory 16a of the RAM 16 indicating whether usage of each function of the MFP 1.

If usage of the selected function is allowed (S12: Yes), the selected function is executed (S 13). If usage of the selected function is not allowed (S12: No), the speaker unit 38 is made to sound to notify the user that usage of the function is not allowed (S14), and the LCD 36 displays a message thereof. When the process S13 and the process S14 are completed, the process return to the process S2.

On the other hand, if any one of the operators is determined not to be operated (S2: No), it is determined whether time while any one of the operators is not operated has elapsed over the prescribed time (S 15). The CPU 12 times since it was determined to be Yes in the previous time, and it is determined based on the result of the timing of the CPU 12. If the time while any one of the operators is not operated has elapsed over the prescribed time (S 1 5: Yes), it is determined whether the lock state is the lock on condition (S16). If the lock state is the lock on condition (S 16: Yes), it is determined whether the function setup which is stored in the function restrictions table 16a1 is the registered user setup of the registered user (S17). If the function setup which is stored in the function restrictions table 16a1 is the registered user setup of the registered user register user setup (S 17: Yes), the function restrictions table 16a1 is setup based on the public registration information stored in the function setting table memory 18a (S18). If the time while any one of the operators is not operated has not elapsed over the prescribed time (S15: No), the process returns to S2. If the lock states is determined not to be the lock on condition (S16: No), the process returns to S2. And also if the function setup stored in the function restrictions table 16a1 is determined not to be corresponding to the registered user (S17: No), the process returns to S2.

Due to the above processes, even if the register user does not execute the operation to set a user back to a public user after the registered user completes usage of the MFP 1, after elapsing the proscribed time, the user setup is returned to the public user setup. Therefore, it can be prevented for a general user who is not a registered user to use a function which is not allowed to be used.

Fig. 6 is a flowchart which shows processes executed if it is determined the lock state is the lock off condition in the determination process S4 shown in Fig. 5. Firstly, it is determined whether the password of the administrator is set up (S21). If the password of the administrator is already set up (S21: Yes), a menu screen shown in Fig. 4A to select a setup item is displayed. As the first setup item, "Lock On->Off' is displayed to change lock status from the lock on condition to the lock off condition, as the second setup item, "Set Password" is displayed to set up the administrator's password, the third setup item, "Setup User" is displayed to set up the individual registered information or the public registration information. By depressing peripheral points in top and bottom of the operation input key 34b, a cursor is moved in the upward, downward direction, when the cursor is positioned at the point indicating an option corresponding to the desired function, the selected function is executed by setting operation.

After the menu display at S22, it is determined whether the item to switch from the lock off condition to the lock on condition is selected (S23). If the item to switch from the lock off condition to the lock on condition is selected (S23: Yes), a screen shown in Fig. 4K to input the password of the administrator is displayed. If the password of the administrator is correctly input, a process to switch from the lock off condition to the lock on condition is executed (S24). Specifically, the lock flag stored in the lock flag memory 18b is changed from 1 to 0, and the function restrictions table 16a1 is set up based on the public registration information stored in the function setting table memory 18a.

If it is determined that the item to switch from the lock off condition to the lock on condition is not selected at S23 (S23: No), it is determined whether a item to set up the password the administrator is selected (S25). If the item to set up the password administrator is selected (S25: Yes), the process to set up the password of the administrator is executed (S26). Specifically, a screen shown in Fig. 4B is displayed to request for input of an old password. If the old password is correctly input, a screen shown in Fig. 4C is displayed to request for input of a new password.

If the new password is input, a password confirm screen shown in Fig. 4D is displayed to request for input the new password again. If the retyped password is identical with the password previously input, the changed new password is registered. If the password of the administrator is determined to not to be yet set up at S21 (S21: No), in the administrator password setup process S26, a password input screen shown in Fig. 4C is displayed to request for input of the new password. If the new password is input, the password confirmation screen shown in Fig. 4D is displayed to request for input of the new password once again. If the retyped password is identical with the password previously input, the changed new password is registered.

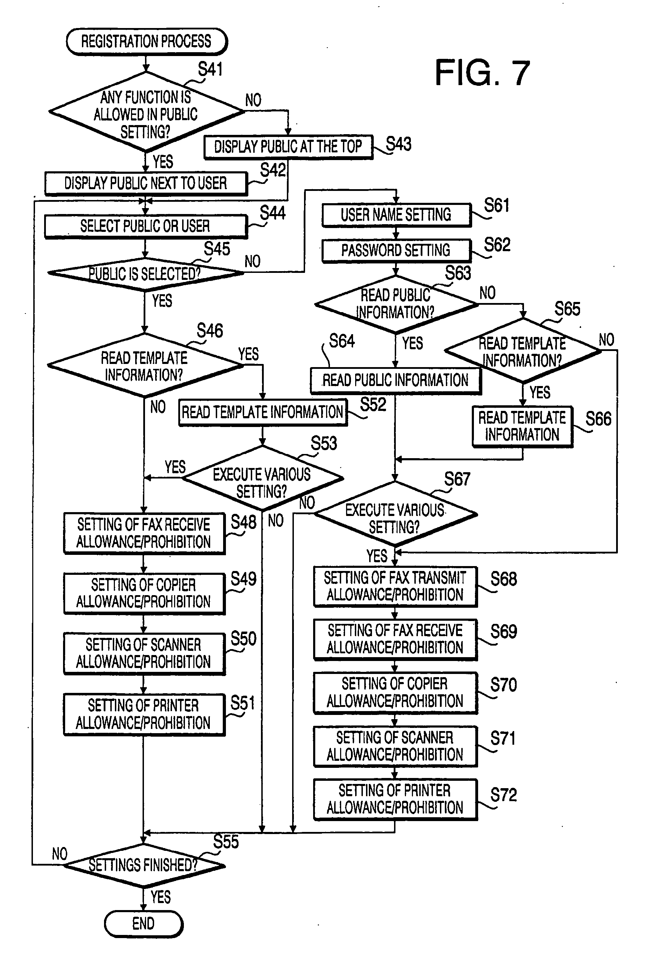

If it is determined that the item to set up the password administrator is not selected (S25: No), it is determined whether a item to set up the user is selected (S27). If the user setup is selected (S27: Yes), the process to set up the user is executed (S28). The user setup process is explained with reference to a flowchart shown in Fig. 7. If any one of the process of S24, S26, S28 is completed, the CPU returns to the process S2 (standby state) shown in the flowchart of Fig. 5. If it is determined that the user setup is not selected, the CPU also returns to the process S2.

Next, with reference to the flowchart of Fig. 7, a registration process which is a process S28 of the flowchart shown in Fig. 6 is explained. Fig. 7 is a flowchart which shows a register process. In the register process, firstly, it is determined which function is set up to be allowed to be used in the public registration information (S41). At the time of shipment from the factory, all functions are set up not to be allowed to be used in the public registration information. For example, if all functions are set up not to be allowed to be used in the public registration information same at the time of shipment from the factory (S41: No), the item to select the public user is displayed at the top position above the user (User1) as can be seen in Fig. 4E (S43). If "Public" is selected by the administrator with the screen shown in Fig. 4E, and some functions are set up to be allowed to be used in the public registration information (S41: Yes), the item to select the public user is displayed at the lower position than the user (User10) (not shown) (S42). In this way, the administrator can recognize whether any function is set up to be allowed to be used in the public registration information based on the difference of display positions of "Public". Therefore, in case that the public registration information is necessary to be set up, if it is found that the public registration information is not set up, the setup of the public registration information can be executed. In addition, in case that public registration information set up, individual registration information can be set up by utilizing the public registration information.

The administrator selects the user or the public user to be set up registration and input items selected (S44) with the selection screen displayed in this way.

Next, it is determined whether the selected item is the public user (S45). If the selected item is the public user (S45: Yes), when the public registration information is registered, a screen to make the administrator select whether the template information stored in the template information memory 18c is used is displayed (not shown). It is determined whether the administrator selects to use the template information stored in the template information memory 18c (S46).

If it is determined that the administrator uses the template information stored in the template information memory 18c (S46: Yes), the template information stored in the template information memory 18c is read out, and the template information is stored in the RAM temporarily (S52). Next, a screen to make the administrator select whether to change the setup of each function in the template information which is read out (not shown), and it is determined whether the administrator selects to change the setup of each function (S53). If it is determined that the administrator selects to change the setup of each function (S53: Yes), or if it is determined that the administrator does not use the template information (S46: No), a setup whether the FAX receive function is allowed (S48), a setup whether the copier function is allowed (S49), a setup whether the scanner function is allowed (S50), and a setup whether the printer function is allowed (S51) are input.

The setups are input by selecting "Enable" to indicate usage is allowed or "Disable" to indicate usage is not allowed while the functions to be set up are displayed as can be seen in Fig. 4J. If the template information is used, firstly, the status of the template information stored in the RAM is displayed. If any change is necessary, the setup of the function is completed only by executing the setting operation. If a change is necessary, the display is changed by moving cursor, and the setting operation is executed. In case that the public registration information is setup, the FAX transmission function cannot be set up to be allowed. In this way, the prescribed functions among the plurality of functions cannot be set up to be allowed to be used. Therefore, it can be prevented that the administrator allows the public user to use each function by accident which should not be allowed.

If it is determined that setup of each function of the template information is not changed (S53: No) or if setup registration of all function is completed in the process S51, the function setups are written in the function setting table memory 18a. As described above, because the template information includes information indicating whether usage of the plurality of functions is allowed to be used, the public registration information can be set up by executing only one operation. Therefore, without setting up each of the plurality functions individually, the registration information can be set up by a simple operation.

If it is determined that the selected item is not the public user (S45: No), the register setup corresponding to the user is executed. Firstly, a screen indicating a user name is displayed as can be seen in Fig. 4F, then the user name is input (S61). The processes in the case that user name is already registered are explained above, in this flowchart the details of the processes are omitted for their complication.

Then, the password setup screen corresponding to the user name shown in Fig. 4H is displayed, and the password is input (S62). Next, when the individual registration information is setup with respect to the user, a screen to make the administrator select whether the public registration information stored in the public registration information memory 18a is used is displayed (not shown). It is determined whether the administrator selects to use the public registration information stored in the public registration information memory 18a (S63).

If it is determined that the administrator uses the public registration information stored in the public registration information memory 18a (S63: Yes), the public registration information stored in the public registration information memory 18a is read out, and the public registration information is stored in the RAM temporarily. If it is determined that the public registration information is not used (S63: No), a screen to make the administrator select whether the template information stored in the template information memory 18c is used is displayed (not shown). It is determined whether the administrator selects to use the template information stored in the template information memory 18c (S65).

If it is determined that the administrator uses the template information stored in the template information memory 18c (S65: Yes), the template information stored in the template information memory 18c is read out, and the template information is stored in the RAM temporarily (S66).

Next, a screen to make the administrator select whether to change the setup of each function in the public registration information or the template information stored in the RAM (not shown) is displayed, and it is determined whether the administrator selects to change the setup of each function (S67).

If it is determined that the administrator selects to change the setup of each function (S67: Yes), or if it is determined that the administrator does not use the template information (S65: No), a setup whether the FAX receive function is allowed (S68), a setup whether the FAX transmission function is allowed (S69), a setup whether the copier function is allowed (S70), a setup whether the scanner function is allowed (S71), and a setup whether the printer function is allowed (S72) are input. If it is determined that the setup of each function is not changed (S67: No), the CPU goes to the process S55. These setups are executed similarly to the case of the public registration information setup. With respect to the registered user, each of all functions including the FAX transmission function can be set up to be allowed or not to be allowed to use. In this way, when the individual registration information is setup, the template information or the public registration information can be used. Therefore, without setting up each of the plurality functions individually, the registration information can be set up by a simple operation.

The public registration information is to allow usage of minimum functions and functions to be allow to use corresponding to a user usually contain functions allowed to a public user and more. Therefore, there is an effect that setup operation for the user can be made easy.

As described above, the individual registration information is setup and stored in the function setting table memory 18a. When the public registration information or the individual registration information is stored in the function setting table memory 18a, a screen to make the administrator select whether the setup process is terminated is displayed (not shown). It is determined whether the administrator selects to terminate the setup process (S55). If it is determined that the setup process is kept going on instead of terminating (S55: No), the CPU goes to the process S44. If it is determined that the setup process is selected to be terminated (S55: Yes), the registration process is terminated.

As described above, in the above embodiment, the individual registration information indicating whether usage of each function of the plurality of functions of the multi function peripheral 1 is allowed corresponding to each user who has a password and the public registration information indicating whether usage of each function of the plurality of functions is allowed for the public user who has not a password are stored. Therefore, function restriction for the registered user and function restriction for the public user can be executed. Herewith, it is not necessary to set up a function to require every user to input his/her password and allow usable function to each user, leading to load reduction in administration of the device. For example, it can be configured that a person in a position for management in a company's section is set up as a registered user for whom each function is set up to be allowed to use, and the other persons are allowed as public users only to use limited functions.

The administrator can change the individual registration information or the public registration information, only if the correct password is input. Therefore, it can be prevented that a person who is not an administrator changes the allowable functions to use, and private use can be prevented as much as possible to cut expenses.

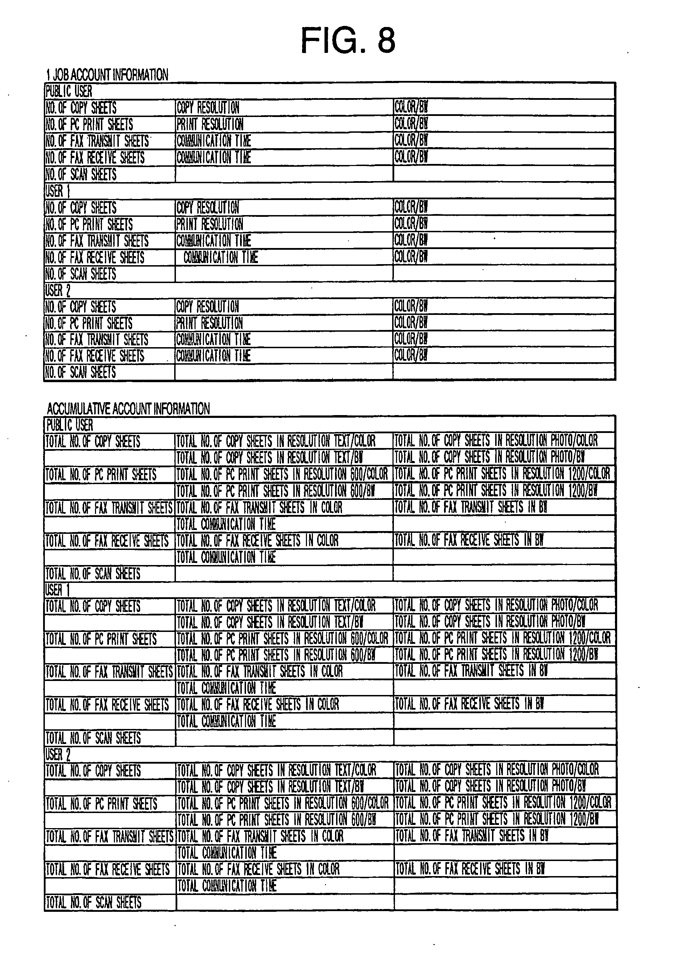

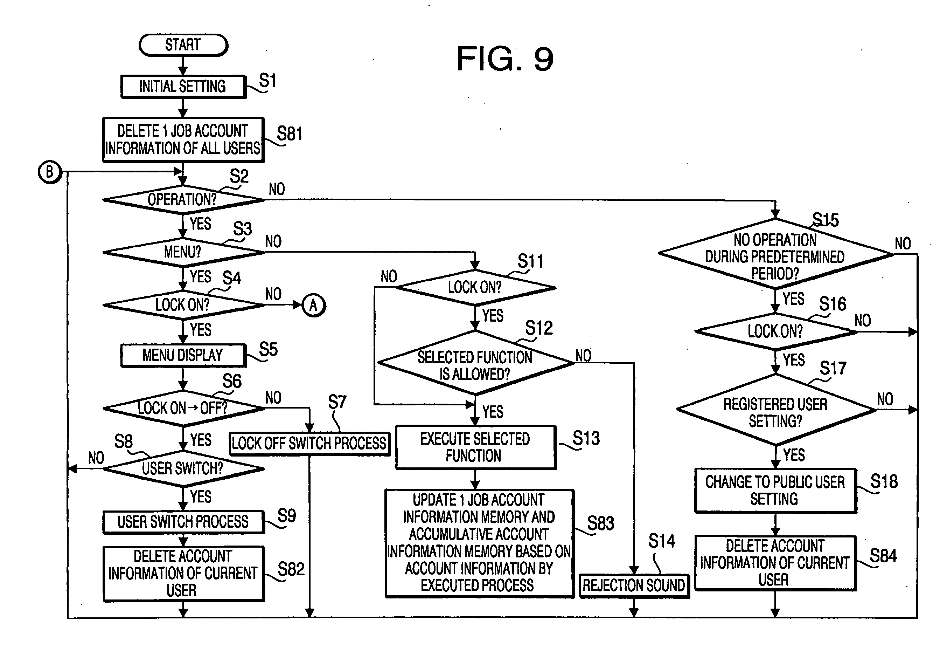

Next, with reference to Fig. 8 and Fig.9, an accounting information recording process to charge each user when the user uses the function of the multi function peripheral 1 is explained. Fig. 8 is a table which shows 1-job accounting information stored in the 1-job account information memory 18c of the flash memory 18 and accumulative accounting information stored in the accumulative accounting information memory 18d. In Fig. 8, two users, User 1 and User 2, are described. However, information of more than two users may be stored.

When a copier function is used, items recorded as 1-job accounting information are a number of copy sheets, copy resolution, color or monochrome (B/W). In case that a printer function is used, a number of print sheets, print resolution, color or monochrome (B/W) are items to be recorded.

Similarly, when a FAX transmission function is used, a number of fax transmit sheets, usage communication time, color or monochrome (B/W) are items to be recorded. When a FAX receiving function is used, a number of fax receiving sheets, usage communication time, color or monochrome (B/W) are items to be recorded. When a scanner function is used, a number of scanned sheets is recorded.

When the copier function is used, items recorded as accumulative accounting information are a total number of copy sheets, and as a breakdown, a number of sheets which are printed in color with Text resolution, a number of sheets which are printed in color with Photo resolution, a number of sheets which are printed in monochrome (B/W) with Text resolution, a number of sheets which are printed in monochrome (B/W) with Photo resolution.

When the printer function is used, a total number of print sheets, and as a breakdown, a number of sheets which are printed in color with resolution 600, a number of sheets which are printed in color with resolution 1200, a number of sheets which are printed in monochrome (B/W) with resolution 600, a number of sheets which are printed in monochrome (B/W) with resolution 1200 are recorded.

When the FAX transmission function is used, FAX transmission a total number of sheets, and as a breakdown, a number of sheets of color FAX and a number of sheets of monochrome (B/W) FAX, and total communication time are recorded. When the FAX receiving function is used, FAX receiving a total number of sheets, and as a breakdown, a number of sheets of color FAX and a number of sheets of monochrome (B/W) FAX, and total communication time are recorded. When the scanner function is used, a number of scan sheets is recorded.

Next, with reference to Fig. 9, in case that the user operates the MFP 1, accounting process is explained. Fig. 9 is a flowchart which shows an accounting process. The flowchart shown in Fig. 9 is a process that is a main process shown in Fig. 5 to which accounting process is added. The corresponding portions are given the same step numbers for convenience of explanation.

A process shown in Fig. 9 is a process which is booted when the power source is turned on in the MFP 1. Firstly, an initial setup is executed (S1), and secondly, the 1-job accounting information of all users stored in the 1-job account information memory 18c is deleted (S8 1). In this way, the 1-job accounting information stored in the previous usage can be deleted.

Then, It is determined whether an operation is done in the standby state (S2). If the operation is done (S2: Yes), it is determined whether the operation is to indicate a option displayed on the menu screen (S3). If the operation is to indicate the option displayed on the menu screen (S3: Yes), it is determined whether the lock state is the lock on condition.

If the lock state is the lock on condition (S4: Yes), a menu screen is displayed to select a process to switch from the lock on condition to the lock off condition or a process to change the registered user (S5). Next, it is determined whether a process to switch from the lock on condition to the lock off condition is selected (S6). If a process to switch from the lock on condition to the lock off condition is selected (S6: Yes), a screen to input the administrator's password is displayed. If the administrator's password is input correctly, the switch process from the lock on condition to the lock off condition is executed (S7).

In the determination process S6, if it is determined that the process to switch from the lock on condition to the lock off condition is not selected (S6: No), then it is determined whether a process to change a user (S8). If the process to change the user (S8: Yes), the process to change the user is executed (S9), and accounting information of the current user is deleted, because the account information is of the previous user before switching (S82). In case of charging a registered user for each job, the administrator is assumed to calculate a utility rate referring to the 1-job account information memory 18c and collect the utility rate before user switching.

When the switch process to the lock off condition is completed in the process S7, and when the user switch process S9 is completed, the process returns to S2. If it is determined that the user switch is not selected (S8: No), the process returns to S2. If it is determined that the lock state is not the lock on the lock on condition (S4), the process goes to processes of the flowchart shown in Fig. 6.

If it is determined that the detected operation is to indicate an operation displayed on the menu screen and the detected operation is select a function of the MFP 1 (S3: No), it is determined whether the lock state is the lock on condition (S11). If the lock state is not the lock on condition (S 11: No), the selected function is executed (S 13). If the lock state is the lock on condition (S11: Yes), it is determined whether usage of the selected function is allowed (S12). The determination is executed by referring to the function restrictions table 16a1 stored in the system memory 16a of the RAM 16 indicating whether usage of each function of the MFP 1.

If usage of the selected function is allowed to use (S12: Yes), the selected function is executed (S1 3). Then, the 1-job accounting information and the accumulative accounting information corresponding to the execute process are generated, and stored in the 1-job account information memory 18c and the accumulative accounting information memory 18d respectively to each user name (S83).

If it is determined that the selected function is not allowed to be used (S12: No), an audio alert indicating rejection is sounded by the speaker unit 38 (S 14). The process S 13 and the process S14 is completed, the CPU returns to the process S2.

On the other hand, if any one of the operators is determined not to be operated (S2: No), it is determined whether time while any one of the operators is not operated has elapsed over the prescribed time (S 15). If the time while any one of the operators is not operated has elapsed over the prescribed time (S 1 5: Yes), it is determined whether the lock state is the lock on condition (S16). If the lock state is the lock on condition (S16: Yes), it is determined whether the function setup which is stored in the function restrictions table 16a1 is the registered user setup of the registered user (S 17).

If the function setup which is stored in the function restrictions table 16a1 is the registered user setup of the registered user register user setup (S 17: Yes), the function restrictions table 16a1 is setup based on the public registration information stored in the function setting table memory 18a (S 18), and accounting information the current user is deleted (S84). The process of accounting information deletion, similarly as the process of S82, is executed, because it is assumed that the current register user's usage is completed and its 1-job accounting is completed.

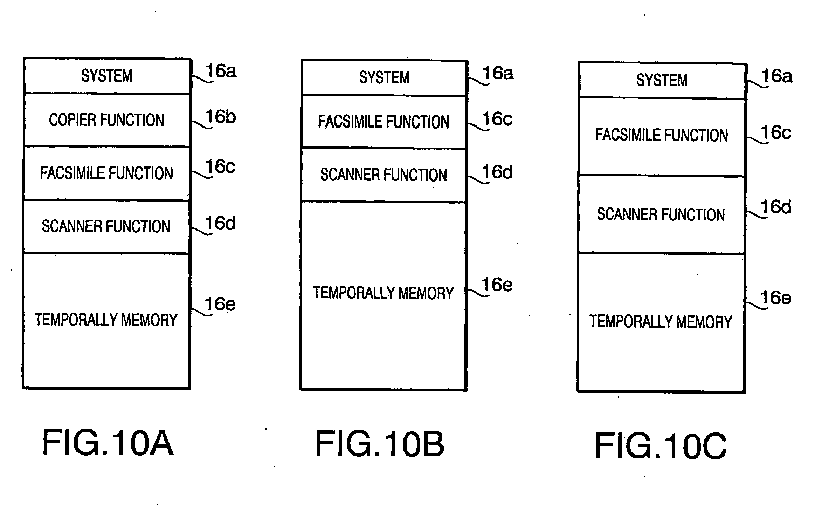

Next, the process of division of the memory area of the RAM 16 is explained. Figs. 10A-C are schematic views each of which shows a division manner where all area of the RAM 16 is divided for each intended use. As described above, functions which are not allowed to use are set up for a public user and each register user. It is not necessary to allocate a memory area to the functions which are not allowed.

For example, Fig. 10A shows a division manner where a copier function, a FAX function and scanner function are allowed to be used. Memory areas are allocated to the system, the FAX function, the scanner function and a temporary memory.

Fig. 10B shows a division manner where a copier function is not allowed to be used by some register user. A memory area is not allocated to the copier function. Memory area of the same size as in Fig. 10A are allocated to the FAX function and the scanner function, and enlarged memory area to which a memory area allocated to the copier function in Fig 10A is allocated to the temporary area.

Fig. 10C shows another division manner where the copier function is not allowed to be used. A memory area is not allocated to the copier function. Enlarged memory areas to which a half of the memory is allocated to the copier function in Fig 10A are allocated to the FAX function and the scanner function. A memory area of the same size as in Fig. 10A is allocated to the temporary area.

As described above referring to Figs. 10A-C, in the case that it is possible to determine whether it is allowed or not to use each function of the plurality of functions of the MFP 1 for a user, areas of the RAM 16 are not allocated to the functions which are not allowed, but areas of the RAM 16 are allocated only to the functions which are allowed to be used. Therefore, memory areas can be effectively used.

In the above, the embodiments of the present invention have been described. An embodiment of the invention is not limited to the above embodiments. According to the claims of the invention, various embodiments may be realized.

For example, in the described embodiment, by operating the operation panel of the multi function peripheral 1, individual registration information and public registration information are setup. However, individual registration information and public registration information may be set up in the server 2 or the PC 3 connected with the MFP 1 via the LAN 200, and forwarded to the multi function peripheral 1.

In the embodiment, when the public registration information or the individual registration information us setup, other registration information are not referred. However, the public registration information, the individual registration information, and the template information may be displayed all together in the large screen, and any one of the information may be changed.

In the embodiment, in the template information memory 18c stores one set of template information. However, a plurality of sets of template information may be stored, one of the templates may be selected, and based on the selected template information, the individual registration information or the public registration information may be set up.

In the embodiment, when the register user or the administrator is authenticated, a password is input with the operation panel, and authentication of the user or the administrator is executed base on the password. However, the user's finger prints, veins of the palm of the hand, or face may be used in authentication.

In the embodiment, when the public information is set up, the template information can be utilized. However, when it is determined whether the template information utilized, the template information may be displayed on the LCD 36. Similarly, in the embodiment, when the individual registration information is set up, the public registration information or the information can be utilized. However, when it is determined whether the public registration information or the template information is utilized, the public registration information or the template information may be displayed on the LCD 36.

In the embodiment, when the individual registration information or the public registration information is set up, one of the functions is displayed, and whether usage of the function is allowed is set up. However, a plurality of functions may be concurrently set up on the large screen to attain operation efficiency.

## Claims

1. A multi function peripheral (1) which has a plurality of functions (51f), comprising:
an input unit (34) for inputting identification information for respective individual operators;
an individual information memory unit (51b) storing individual registration information which indicates, for each respective individual operator having identification information for input into the input unit (34), whether respectively it is allowed to use each function of the plurality of functions (51f); and
a function setup unit (12) that is arranged to set up, in the case that identification information is input to the input unit (34), whether usage of each respective function of the plurality of functions (51f) is allowed based on the individual registration information stored in the individual information memory unit (51b) in association with the inputted identification information; **characterized by**:
a public information memory unit (51a) storing public registration information that indicates, for the case where identification information is not input, whether respectively it is allowed to use each function of the plurality of functions (51f); and in that
the function setup unit (12) is arranged to set up, in the case that identification information is not input to the input unit (34), whether usage of each respective function of the plurality of functions (51f) is allowed based on the public registration information stored in the public information memory unit (51 a).

2. The multi function peripheral according to claim 1, further comprising:
a determination unit (S25) arranged to determine whether prescribed administrator identification information is input to the input unit (34); and
a registration information setup unit (S28) arranged to make it possible, responsive to the prescribed administrator identification information being determined to be input by the determination unit (S25), to set up, in the individual information memory unit (51b) and the public information memory unit (51a) respectively, the individual registration information and the public registration information indicating whether each of the plurality of functions (51f) is allowed to be used.

3. The multi function peripheral according to claim 2,
wherein the public registration information stored in the public information memory unit (51a) indicates prescribed functions of the plurality of functions (51f) that cannot be allowed to be used by the registration information setup unit (S28).

4. The multi function peripheral according to claims 2 or 3, further comprising:
a template information memory unit (51c) storing template information for providing a preliminarily set up as to whether each of plurality of functions (51f) is allowed to be used,
wherein the registration information setup unit (S28) is arranged to be able to set up the individual registration information or public registration information indicating whether each function is allowed to be used to the individual information memory unit (51b) and the public information memory unit (51a) based on the template information stored in the template information memory unit (51c).

5. The multi function peripheral according to any one of claims 2-4,
wherein the registration information setup unit (S28) is provided with a public information utilization unit for setting up the individual registration information in the individual information memory unit (51b) using the public registration information stored in the public information memory unit (51a).

6. The multi function peripheral according to claim 5,
wherein the public information utilization unit is arranged to set up individual registration information in the individual information memory unit (51b) to allow similar usage of functions to usage allowed among the plurality of functions in the public registration information stored in the public information memory unit (51a).

7. The multi function peripheral according to claim 5, further comprising:
a display unit (36),
wherein the public information utilization unit is arranged to display on the display unit (36) setup contents of the public registration information stored in the public information memory unit (51a) in case that the individual registration information is set up in the individual information memory unit (51b).

8. The multi function peripheral according to claim 7,
wherein the individual information memory unit (51b) is arranged to display information on the display unit (36) indicating whether the public registration information is set up in the public information memory unit (5 1 a) in case that the individual registration information is set up.

9. The multi function peripheral according to any one of claims 2-8,
wherein the public information memory unit (51a) stores an initial registration information that indicates that usage of each function of the plurality of functions (51f) is not allowed in an initial condition where the registration information setup unit has not yet set up.

10. The multi function peripheral according to any one of claims 1-9, further comprising:
an operation unit (34) enabling an operator to select one of the plurality of functions (51f) and to set up parameters of each of the plurality functions; and
a time unit that times in case that either the operator or the operation unit (34) is not operating,
wherein, in the case that identification information is input to the input unit (34) and it is set up whether usage of each function is allowed based on the individual registration information stored in the individual information memory unit (51b) in association with the inputted identification information, when the time unit times a prescribed time, the function setup unit sets up whether usage of each function is allowed based on the public registration information stored in the public information memory unit (51 a).

11. The multi function peripheral according to any one of claims 1-10, further comprising:
a lock flag memory (18b) for storing a lock flag showing if the multi function peripheral is in a lock off condition where usage of all functions of the plurality of functions (51f) is not limited or in a lock off condition where allowable functions of the plurality of functions (51f) are restricted according to the individual registration information or the public registration information.

12. A method of operating a multi function peripheral having a plurality of functions (51f), the method including:
an input step to input identification information for respective individual operators;
a storing step storing in an individual information memory unit (51b) of the multi function peripheral individual registration information indicating whether respectively each of the plurality of functions (51f) is allowed to be used in association with the inputted identification information; and
a function setup step setting up whether usage of each respective function of the plurality of functions is allowed based on individual registration information stored in the individual information memory unit in association with the identification information of a respective individual operator in the case that the identification information of a respective individual operator is input in the input step; **characterized in that**:
the storing step includes storing in a public information memory unit (51a) of the multi function peripheral public registration information indicating whether respectively each of the plurality of functions is allowed to be used corresponding to the case that identification information is not input; and the function setup step includes setting up whether usage of each respective function of the plurality of functions is allowed based on the public registration information stored in the public information memory unit in the case that identification information is not input to the input unit.

13. The method according to claim 12, further including:
a storing step storing, in a template information memory unit (51 c) of the multi function peripheral, template information for preliminarily set up of whether usage of each function of the plurality of functions is allowed;
a template information utilization step setting up the individual registered information or the public registration information indicating whether usage of each function of the plurality of functions (51f) is allowed based on the template information stored in the template information memory unit (51c), the individual information memory unit (51b) and the public information memory unit (51 a); and
a public information utilization step setting up the individual registration information in the individual information memory unit (51 b) based on the registration information stored in the public information memory unit (51a).

14. A multi function peripheral control program product comprising computer readable instructions to be executed by a computer, the instructions causing the computer to execute the method of claim 12 or 13.

## Patentansprüche

1. Ein Mehrfunktions-Peripheriegerät (1), welches eine Vielzahl von Funktionen (51f) besitzt, umfassend:
eine Eingabeeinheit (34) zum Eingeben von Identifizierungsinformationen für entsprechende individuelle Bedienpersonen;
eine Speichereinheit (51b) für individuelle Informationen, die individuelle Registrierinformationen speichert, welche für jede entsprechende individuelle Bedienperson, die Identifizierungsinformationen zum Eingeben in die Eingabeeinheit (34) besitzt, angeben, ob es ihr entsprechend erlaubt ist, jede einzelne Funktion der Vielzahl von Funktionen (51f) zu benutzen; und
eine Funktionseinstelleinheit (12), die dazu eingerichtet ist, in dem Fall, dass die Identifizierungsinformationen in die Eingabeeinheit (34) eingegeben sind, einzustellen, ob die Verwendung jeder entsprechenden Funktion der Vielzahl von Funktionen (51f) auf der Grundlage der individuellen Registrierungsinformationen, die in der Speichereinheit (51 b) für individuelle Informationen gespeichert sind, in Verbindung mit den eingegebenen Identifizierungsinformationen erlaubt ist; **gekennzeichnet durch**
eine Speichereinheit (51a) für öffentliche Informationen, die öffentliche Registrierinformationen speichert, die für den Fall, in welchem Identifizierungsinformationen nicht eingegeben sind, anzeigt, ob es jeweils entsprechend erlaubt ist, jede einzelne Funktion der Vielzahl von Funktionen (51f) zu verwenden; und dass die Funktionseinstelleinheit (12) eingerichtet ist, in dem Fall, dass Identifizierungsinformationen nicht in die Eingabeeinheit (34) eingegeben sind, einzustellen, ob die Verwendung der jeweils entsprechenden Funktion der Vielzahl von Funktionen (51f) auf der Grundlage der öffentlichen Registrierinformationen, die in der Speichereinheit (51 a) für öffentliche Informationen gespeichert sind, erlaubt ist.

2. Das Mehrfunktions-Peripheriegerät gemäß Anspruch 1, ferner umfassend
eine Bestimmungseinheit (S25), die eingerichtet ist, zu bestimmen, ob vorgeschriebene Administrator-Identifizierungsinformationen in die Eingabeeinheit (34) eingegeben sind; und
eine Registrierinformations-Einstelleinheit (S28), die eingerichtet ist, es zu ermöglichen, in Reaktion auf die vorgeschriebenen Administrator-Identifizierungsinformationen, die durch die Bestimmungseinheit (S25) als eingegeben bestimmt sind, in der Speichereinheit (51 b) für individuelle Informationen und der Speichereinheit (51a) für öffentliche Informationen jeweils entsprechend die individuellen Registrierinformationen und die öffentlichen Registrierinformationen einzustellen, die angeben, ob die Verwendung jeder der Vielzahl von Funktionen (51f) erlaubt ist.

3. Das Mehrfunktions-Peripheriegerät gemäß Anspruch 2,
wobei die in der Speichereinheit (51a) für öffentliche Informationen gespeicherten öffentlichen Registrierinformationen vorgeschriebene Funktionen aus der Vielzahl von Funktionen (51f) angeben, die von der Registrierinformations-Einstelleinheit (S28) nicht zur Verwendung erlaubt werden können.

4. Das Mehrfunktions-Peripheriegerät gemäß Anspruch 2 oder 3, ferner umfassend:
eine Speichereinheit (51 c) für Musterinformationen, welche Musterinformationen zum Bereitstellen einer Vorab-Einstellung dahingehend speichert, ob jede der Vielzahl von Funktionen (51f) zur Verwendung erlaubt ist,
wobei die Registrierinformations-Einstelleinheit (S28) dazu eingerichtet ist, in der Lage zu sein, in der Speichereinheit (51b) für individuelle Informationen und in der Speichereinheit (51a) für öffentliche Informationen auf Grundlage der in der Speichereinheit (51c) für Musterinformationen gespeicherten Musterinformationen die individuellen Registrierinformationen oder öffentlichen Registrierinformationen so einzustellen, dass angegeben ist, ob jede einzelne Funktion zur Verwendung erlaubt ist.

5. Das Mehrfunktions-Peripheriegerät gemäß einem der Ansprüche 2 bis 4,
wobei die Registrierinformations-Einstelleinheit (S28) mit einer Öffentliche-Informationen-Verwendungseinheit versehen ist, um in der Speichereinheit (51 b) für individuelle Informationen unter Verwendung der in der Speichereinheit (51a) für öffentliche Informationen gespeicherten, öffentlichen Registrierinformationen die individuellen Registrierinformationen einzustellen.

6. Das Mehrfunktions-Peripheriegerät gemäß Anspruch 5,
wobei die Öffentliche-Informationen-Verwendungseinheit dazu eingerichtet ist, in der Speichereinheit (51b) für individuelle Informationen die individuellen Registrierinformationen einzustellen, so dass eine Verwendung von Funktionen erlaubt ist ähnlich wie die Verwendung unter der Vielzahl von Funktionen bei den öffentlichen Registrierinformationen erlaubt ist, die in der Speichereinheit (51a) für öffentliche Informationen gespeichert sind.

7. Das Mehrfunktions-Peripheriegerät gemäß Anspruch 5, ferner umfassend:
eine Anzeigeeinheit (36),
wobei die Öffentliche-Informationen-Verwendungseinheit eingerichtet ist, auf der Anzeigeeinheit (36) Einstellungsinhalte der in der Speichereinheit (51 a) für öffentliche Informationen gespeicherten öffentlichen Registrierinformationen in demjenigen Fall anzuzeigen, in welchem die individuellen Registrierinformationen in der Speichereinheit (51b) für individuelle Informationen eingestellt sind.

8. Das Mehrfunktions-Peripheriegerät gemäß Anspruch 7,
wobei die Speichereinheit (51b) für individuelle Informationen eingerichtet ist, auf der Anzeigeeinheit (36) Informationen anzuzeigen, welche angeben, ob die öffentlichen Registrierinformationen in der Speichereinheit (51a) für öffentliche Informationen in dem Fall eingestellt sind, in welchem die individuellen Registrierinformationen eingestellt sind.

9. Das Mehrfunktions-Peripheriegerät gemäß einem der Ansprüche 2 bis 8,
wobei die Speichereinheit (51a) für öffentliche Informationen eine Anfangsregistrierinformation speichert, die angibt, dass die Verwendung jeder Funktion der Vielzahl von Funktionen (51f) in einer Anfangsbedingung, in welcher die Einstelleinheit für Registrierinformationen noch nicht eingestellt wurde, nicht erlaubt ist.

10. Das Mehrfunktions-Peripheriegerät gemäß einem der Ansprüche 1 bis 9, ferner umfassend:
eine Bedieneinheit (34), die eine Bedienperson in die Lage versetzt, eine der Vielzahl von Funktionen (51f) auszuwählen und Parameter für jede dieser Vielzahl von Funktionen einzustellen; und
eine Zeitmesseinheit, die in demjenigen Fall die Zeit misst, in welchem entweder die Bedienperson oder die Bedieneinheit (34) untätig ist,
wobei in dem Fall, in welchem die Identifizierungsinformationen in die Eingabeeinheit (34) eingegeben sind, und eingestellt ist, ob auf Grundlage der in der Speichereinheit (51 b) für individuelle Informationen gespeicherten individuellen Registrierinformationen in Verbindung mit den eingegebenen Identifikationsinformationen die Verwendung jeder Funktion erlaubt ist, die Funktionseinstelleinheit dann, wenn die Zeitmesseinheit eine vorgeschriebene Zeit misst, einstellt, ob die Verwendung jeder Funktion auf Grundlage der öffentlichen Registrierinformationen, die in der Speichereinheit (51a) für öffentliche Informationen gespeichert sind, erlaubt ist.

11. Das Mehrfunktions-Peripheriegerät gemäß einem der Ansprüche 1 bis 10, ferner umfassend:
einen Sperr-Flag-Speicher (18b) zum Speichern eines Sperr-Flags, das zeigt, wenn sich das Mehrfunktions-Peripheriegerät in einem gesperrten Zustand befindet, wo die Verwendung aller Funktionen der Vielzahl von Funktionen (51f) nicht begrenzt ist, oder sich in einem gesperrten Zustand befindet, wo die erlaubten Funktionen der Vielzahl von Funktionen (51f) entsprechend der individuellen Registrierinformationen oder der öffentlichen Registrierinformationen eingeschränkt sind.

12. Ein Verfahren zum Betreiben eines Mehrfunktions-Peripheriegeräts mit einer Vielzahl von Funktionen (51f), wobei das Verfahren aufweist:
einen Eingabeschritt zum Eingeben von Identifizierungsinformationen für jeweils entsprechende individuelle Bedienpersonen;
einen Speicherschritt zum Speichern von individuellen Registrierinformationen des Mehrfunktions-Peripheriegeräts in einer Speichereinheit (51b) für individuelle Informationen, die angeben, ob es der jeweiligen der Vielzahl von Funktionen (51f) erlaubt ist, in Verbindung mit den eingegebenen Identifizierungsinformationen verwendet zu werden; und
einen Funktionseinstellschritt, der einstellt, ob die Verwendung der jeweils entsprechenden Funktion der Vielzahl von Funktionen auf der Grundlage von individuellen Registrierinformationen, die in der Speichereinheit für individuelle Informationen gespeichert sind, in Verbindung mit den Identifizierungsinformationen einer entsprechenden individuellen Bedienperson in dem Fall erlaubt ist, in welchem die Identifizierungsinformationen einer entsprechenden individuellen Bedienperson in dem Eingabeschritt eingegeben sind; **dadurch gekennzeichnet, dass**:
der Speicherschritt das Speichern von öffentlichen Registrierinformationen in einer Speichereinheit (51a) für öffentliche Informationen des Mehrfunktions-Peripheriegeräts beinhaltet, die angeben, ob es der jeweiligen der Vielzahl von Funktionen erlaubt ist, entsprechend dem Fall verwendet zu werden, in welchem die Identifizierungsinformationen nicht eingegeben sind; und der Funktionseinstellschritt das Einstellen beinhaltet, ob die Verwendung jeder entsprechenden Funktion der Vielzahl von Funktionen auf der Grundlage der öffentlichen Registrierinformationen erlaubt ist, die in der Speichereinheit für öffentliche Informationen gespeichert sind, in dem Fall, in welchem die Identifizierungsinformationen nicht in die Eingabeeinheit eingegeben sind.

13. Das Verfahren gemäß Anspruch 12, ferner umfassend:
einen Speicherschritt, in welchem in einer Speichereinheit (51 c) für Musterinformationen des Multifunktions-Peripheriegeräts Musterinformationen zum vorläufigen Einstellen dahingehend gespeichert werden, ob die Verwendung jeder Funktion der Vielzahl von Funktionen erlaubt ist;
einen Verwendungsschritt für Musterinformationen, in welchem die individuellen Registrierinformationen oder die öffentlichen Registrierinformationen eingestellt werden, die angeben, ob die Verwendung jeder Funktion der Vielzahl von Funktionen (51f) auf Grundlage der in der Speichereinheit (51c) für Musterinformationen, der Speichereinheit (51b) für individuelle Informationen sowie der Speichereinheit (51 a) für öffentliche Informationen gespeicherten Musterinformationen erlaubt ist; und
einen Verwendungsschritt für öffentliche Informationen, in welchem die individuellen Registrierinformationen in der Speichereinheit (51 b) für individuelle Informationen auf Grundlage der in der Speichereinehit (51a) für öffentliche Informationen gespeicherten Registrierinformationen eingestellt werden.

14. Ein Mehrfunktions-Peripheriesteuerprogrammprodukt, umfassend Computer-lesbare Anweisungen, die durch einen Computer auszuführen sind, wobei die Anweisungen den Computer dazu veranlassen, das Verfahren gemäß Anspruch 12 oder 13 auszuführen.

## Revendications

1. Périphérique multifonction (1) qui présente plusieurs fonctions (51f), comprenant :
une unité d'entrée (34) pour saisir des informations d'indentification pour des opérateurs individuels respectifs ;
une unité (51b) de mémoire d'informations individuelles stockant des informations d'enregistrement individuelles qui indiquent, pour chaque opérateur individuel respectif ayant des informations d'identification à entrer dans l'unité d'entrée (34), si on peut respectivement utiliser chaque fonction de la pluralité de fonctions (51f) ; et
une unité de configuration de fonctions (12) qui est agencée pour configurer, dans le cas où des informations d'identification sont entrées dans l'unité d'entrée (34), si l'utilisation de chaque fonction respective de la pluralité de fonctions (51f) est permise sur la base des informations d'enregistrement individuelles stockées dans l'unité (51b) de mémoire d'informations individuelles en association avec les informations d'identification entrées ; **caractérisée par** :
une unité (51a) de mémoire d'informations publiques stockant des informations d'enregistrement publiques qui indiquent, dans le cas où des informations d'identification ne sont pas entrées, si on peut respectivement utiliser chaque fonction de la pluralité de fonctions (51f) ; et en ce que
l'unité de configuration de fonctions (12) est agencée pour configurer, dans le cas où des informations d'identification sont entrées dans l'unité d'entrée (34), si l'utilisation de chaque fonction respective de la pluralité de fonctions (51f) est permise sur la base des informations d'enregistrement publiques stockées dans l'unité de mémoire d'informations publiques.

2. Périphérique multifonction selon la revendication 1, en outre comprenant :
une unité de détermination (S25) agencée pour déterminer si des informations d'identification d'administrateur prescrites sont entrées dans l'unité d'entrée (34) ; et
une unité (S28) de configuration d'informations d'enregistrement agencée pour permettre, en réponse à la détermination par l'unité de détermination (S25) que les informations d'identification d'administrateur prescrites sont entrées, pour configurer, dans l'unité (51b) de mémoire d'informations individuelles et l'unité (51a) de mémoire d'informations publiques respectivement, les informations d'enregistrement individuelles et les informations d'enregistrement publiques indiquant s'il est permis d'utiliser chacune de la pluralité de fonctions (51f).

3. Périphérique multifonction selon la revendication 2,
où les informations d'enregistrement publiques stockées dans l'unité de mémoire d'informations publiques (51a) indiquent des fonctions prescrites de la pluralité de fonctions (51f) que l'unité (S28) de configuration d'informations d'enregistrement n'est pas habilitée à utiliser.

4. Périphérique multifonction selon les revendications 2 ou 3, en outre comprenant :
une unité (51c) de mémoire d'informations de modèle stockant des informations de modèle pour fournir une configuration préliminaire selon que chacune de la pluralité de fonctions (51f) peut être utilisée ou non,
où l'unité (S28) de configuration d'informations d'enregistrement est agencée pour pouvoir configurer les informations d'enregistrement individuelles ou les informations d'enregistrement publiques indiquant si chacune des fonctions peut être utilisée par l'unité (51b) de mémoire d'informations individuelles et l'unité (51a) de mémoire d'informations publiques sur la base des informations de modèle stockées dans l'unité (51c) de mémoire d'informations de modèle.

5. Périphérique multifonction selon l'une quelconque des revendications 2-4,
où l'unité (S28) de configuration d'informations d'enregistrement est prévue avec une unité d'utilisation d'informations publiques pour configurer les informations d'enregistrement individuelles dans l'unité (51b) de mémoire d'informations individuelles en utilisant les informations d'enregistrement publiques stockées dans l'unité (51a) de mémoire d'informations publiques.

6. Périphérique multifonction selon la revendication 5,
où l'unité d'utilisation d'informations publiques est agencée pour configurer des informations d'enregistrement individuelles dans l'unité (51b) de mémoire d'informations individuelles pour permettre une utilisation similaire de fonctions à l'utilisation permise parmi la pluralité de fonctions dans les informations d'enregistrement publiques stockées dans l'unité (51a) de mémoire d'informations publiques.

7. Périphérique multifonction selon la revendication 5, en outre comprenant :
une unité d'affichage (36),
où l'unité d'utilisation d'informations publiques est agencée pour afficher sur l'unité d'affichage (36) des contenus de configuration des informations d'enregistrement publiques stockées dans l'unité (51a) de mémoire d'informations publiques dans le cas où les informations d'enregistrement individuelles sont configurées dans l'unité (51b) de mémoire d'informations individuelles.

8. Périphérique multifonction selon la revendication 7,
où l'unité (51b) de mémoire d'informations individuelles est agencée pour afficher des informations sur l'unité d'affichage (36) indiquant si les informations d'enregistrement publiques sont configurées dans l'unité (51a) de mémoire d'informations publiques dans le cas où les informations d'enregistrement individuelles sont configurées.

9. Périphérique multifonction selon l'une quelconque des revendications 2-8,
où l'unité (51a) de mémoire d'informations publiques stocke des informations d'enregistrement initiales qui indiquent que l'utilisation de chaque fonction de la pluralité de fonctions (51f) n'est pas permise dans une condition initiale dans laquelle l'unité de configuration d'informations d'enregistrement n' pas encore été configurée.

10. Périphérique multifonction selon l'une quelconque des revendications 1-9, comprenant en outre :
une unité de manoeuvre (34) permettant à un opérateur de sélectionner une de la pluralité de fonctions (51f) et de configurer des paramètres de chacune de la pluralité de fonctions ; et
une unité de chronométrage qui mesure une durée dans le cas où soit l'opérateur ou l'unité de manoeuvre (34) ne fonctionne pas,
dans laquelle, dans le cas où les informations d'identification sont entrées dans l'unité d'entrée (34) et on configure si l'utilisation de chaque fonction est permise sur la base des informations d'enregistrement individuelles stockées dans l'unité (51b) de mémoire d'informations individuelles en association avec les informations d'identification entrées, lorsque l'unité de chronométrage mesure une durée prescrite, l'unité de configuration de fonctions configure si l'utilisation de chaque fonction est permise sur la base des informations d'enregistrement publiques stockées dans l'unité (51a) de mémoire d'informations publiques.

11. Périphérique multifonction selon l'une quelconque des revendications 1-10, en outre comprenant:
une mémoire (18b) de drapeau de verrouillage destinée à stocker un drapeau de verrouillage montrant si le périphérique multifonction se trouve dans une condition de déverrouillage où l'utilisation de toutes les fonctions de la pluralité de fonctions (51f) n'est pas limité ou dans une condition de déverrouillage où des fonctions admissibles de la pluralité de fonctions (51f) sont limitées selon les informations d'enregistrement individuelles ou les informations d'enregistrement publiques.

12. Procédé d'exploitation d'un périphérique multifonction ayant une pluralité de fonctions (51f), le procédé comprenant :
une étape d'entrée qui consiste à saisir des informations d'identification pour des opérateurs individuels respectifs ;
une étape de stockage stockant dans une unité (51b) de mémoire d'informations individuelles du périphérique multifonction des informations d'enregistrement individuelles indiquant si respectivement chacune de la pluralité de fonctions (51f) peut être utilisée en association avec les informations d'identification entrées ; et
une étape de configuration de fonction configurant si l'utilisation de chaque fonction respective de la pluralité de fonctions est permise sur la base d'informations d'enregistrement individuelles stockées dans l'unité de mémoire d'informations individuelles en association avec les informations d'identification d'un opérateur individuel respectif dans le cas où les informations d'identification d'un opérateur individuel respectif sont entrées à l'étape d'entrée ; **caractérisé en ce que** :
l'étape de stockage comprend le fait de stocker dans une unité (51a) de mémoire d'informations publiques du périphérique multifonction des informations d'enregistrement publiques indiquant si respectivement chacune de la pluralité de fonctions peut être utilisée correspondant au cas où des informations d'identification ne sont pas entrées ; et l'étape de configuration de fonction comprend le fait de configurer si l'utilisation de chaque fonction respective de la pluralité de fonctions est permise sur la base des informations d'enregistrement publiques stockées dans l'unité de mémoire d'informations publiques dans le cas où des informations d'identification ne sont pas entrées dans l'unité d'entrée.

13. Procédé selon la revendication 12, comprenant en outre :
une étape de stockage stockant, dans une unité (51c) de mémoire d'informations de modèle du périphérique multifonction, des informations de modèle pour configurer au préalable si l'utilisation de chaque fonction de la pluralité de fonctions est permise ;
une étape d'utilisation d'informations de modèle configurant les informations individuelles enregistrées ou les informations d'enregistrement publiques indiquant si l'utilisation de chaque fonction de la pluralité de fonctions (51f) est permise sur la base des informations de modèle stockées dans l'unité (51c) de mémoire d'informations de modèle, l'unité (51b) de mémoire d'informations individuelles et l'unité (51a) de mémoire d'informations publiques ; et
une étape d'utilisation d'informations publiques configurant les informations d'enregistrement individuelles dans l'unité (51b) de mémoire d'informations individuelles sur la base des informations d'enregistrent stockées dans l'unité (51a) de mémoire d'informations publiques.

14. Un produit de programme de commande d'un périphérique multifonction comprenant des instructions lisibles par ordinateur à exécuter par un ordinateur, les instructions amenant l'ordinateur à exécuter le procédé de la revendication 12 ou 13.
